Europäisches Patentamt

European Patent Office

Office européen des brevets

(11) Publication number: **0 279 455 B1**

## EUROPEAN PATENT SPECIFICATION

(45) Date of publication of patent specification: **28.07.93**

(51) Int. Cl.⁵: **B29C 67/22**, C08J 9/22, //B29K23:00

(21) Application number: **88102461.6**

(22) Date of filing: **19.02.88**

(54) **Process for production of expansion-molded articles of linear low density polyethylene resins.**

(30) Priority: **20.02.87 JP 38844/87**

(43) Date of publication of application:
**24.08.88 Bulletin 88/34**

(45) Publication of the grant of the patent:
**28.07.93 Bulletin 93/30**

(84) Designated Contracting States:
**BE CH DE ES FR GB IT LI NL SE**

(56) References cited:
**EP-A- 0 212 204**
**EP-A- 0 263 989**

**PATENT ABSTRACTS OF JAPAN, vol. 8, no. 174 (M-316), 10th October 1984; & JP-A-59 068 215 (NIPPON STYREN PAPER)**

(73) Proprietor: **KANEGAFUCHI KAGAKU KOGYO KABUSHIKI KAISHA**
**2-4 Nakanoshima 3-chome**
**Kita-ku Osaka-shi Osaka-fu 530(JP)**

(72) Inventor: **Maeda, Hirofumi**
**1-773, Ooazahara**
**Takatsuki-shi Osaka-fu(JP)**

(74) Representative: **Vossius & Partner**
**Siebertstrasse 4 P.O. Box 86 07 67**
**W-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a process for production of expansion-molded articles of linear low density polyethylene resins (hereafter referred to as L-LDPE) in a mold which are employed e.g. as thermal insulators, shock absorbing packaging materials, reusable containers or core materials for bumpers.

Expansion-molded articles of L-LDPE are excellent in resistance to chemicals, resistance to heat and strain recovery after compression as compared to expansion-molded articles of polystyrene. Further the expansion-molded articles of L-LDPE are also excellent in resistant to heat, compressive strength and tensile strength even when compared with expansion-molded articles of low density polyethylene so that they have been used as shock absorbing packaging materials, reusable containers and core materials for bumpers. To produce such expansion-molded articles of L-LDPE, there are known the following methods;

(A) A method which comprises treating pre-expanded beads of a polyolefin with an inorganic gas under pressure to impregnate the beads with the inorganic gas, gradually releasing the pressure, filling with the beads a mold capable of closing but incapable of sealing while the inner pressure of the beads is kept at 1.18 atms. or more and thermally fusing the beads with steam to prepare a molded article in the shape of the mold (US-A-3,953,558).

(B) A method which comprises filling with pre-expanded beads of a polyolefin a mold capable of closing but incapable of sealing, thermally fusing the beads with steam, withdrawing the molded article from the mold and, thermally aging while the volume of the molded article is 70 to 110% of the volume of the mold to prepare the molded article in the shape of the mold (US-A-4,631-159).

(C) A method which comprises compressing pre-expanded beads of a cross-linked polyolefin to 80% or less of the apparent bulk volume of the raw beads by gaseous pressure, filling with the compressed beads a mold and thermally fusing the beads to give a molded article in the shape of the mold (JP-B-33996/1978).

However, Method (A) described above involves the defect that the initial investment becomes large because the installation for the compressive treatment with the inorganic gas is of a larger scale. Method (B) has the defect that products having a complicated shape are inferior in visual appearance such as sink mark and surface property. Further Method (C) is not sufficiently satisfactory in surface property and dimensional accuracy.

An object of the present invention is to provide a process for production of expansion-molded articles of L-LDPE having good dimensional accuracy, excellent fusion rate and surface property in a mold with high productivity.

As a result of extensive investigations in view of such actual situations, the present inventors have found that the problems described above could be overcome by controlling the ratio $A_H/A_L$ within a specific range, i.e.:

$$5\% \leq A_H/A_L \times 100\% \leq 80\%$$

and controlling the compression rate of the pre-expanded beads within a specific range ($A_L$ being the peak fusion area at the melting point at a low temperature side ($T_{ML}$) and $A_H$ being the peak fusion area at the melting point at a high temperature side ($T_{MH}$) of pre-expanded L-LDPE beads measured by the differential scanning calorimetry (hereafter referred to as the DSC method)).

Figure 1 is a graph showing the determination of the melting point ($T_M$) of L-LDPE as employed in Example 2 of the present invention and measured by the DSC method.

Figure 2 is a graph showing the determination of the melting point ($T_{ML}$) at the low temperture side and the melting point ($T_{MH}$) at the high temperature side of the L-LDPE pre-expanded beads as well as of the ratio $A_H/A_L$ from the respective peak areas ($A_L$, $A_H$).

The present invention is directed to a process for production of expansion-molded articles (hereinater referred to as "molded articles") of L-LDPE in a mold which comprises compressing pre-expanded L-LDPE beads having two melting points (measured by differential scanning calorimetry) and having a ratio $A_H/A_L \times 100\%$ of 5 to 80% using a pressurized gas, filling a mold capable of closing but incapable of sealing with the compressed beads, then venting the mold and heating and fusing the beads with steam, wherein the compression rate of the pre-expanded beads immediately before the heating with steam to the original pre-expanded beads is maintained at 5 to 60% ($A_L$ being the peak fusion area at the melting point at the low temperature side ($T_{ML}$) and $A_H$ being the peak fusion area at the melting point at the high temperature side ($T_{MH}$)). Thereby a molded article in the shape of the mold is produced.

The DSC method in the present invention will be described below.

As devices for measurement, mention may be made of ordinary differential scanning calorimeters, for example, Model DSC-2 manufactured by Perkin-Elmer Co., Ltd., Model TAS-100 manufactured by Rigaku Denki K.K., etc.

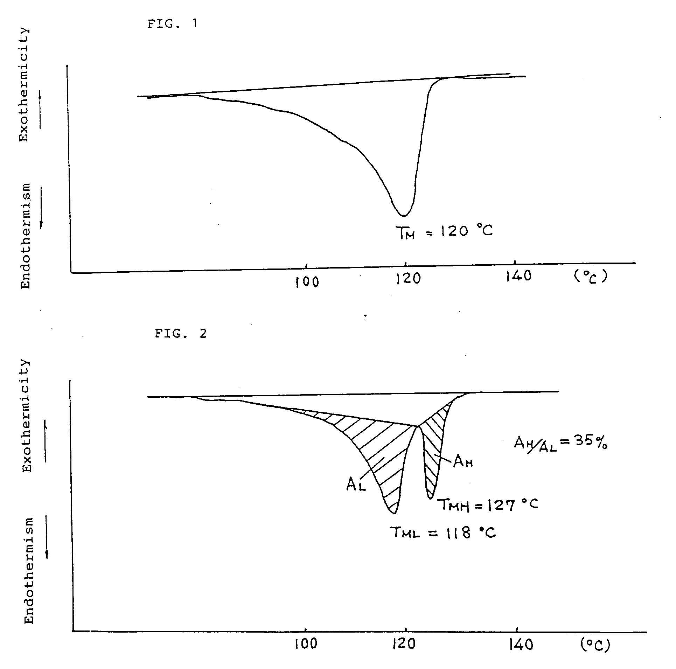

The melting point of L-LDPE described above is the peak temperature $T_M$ obtained from the evaluation of the heat consumption (endothermic curve) when elevating the temperature of a sample to 200 °C at a rate of 10°C/min and then cooling it for crystallization to room temperature at a rate of 10°C/min using a differential scanning calorimeter (DSC) (Figure 1).

On the other hand, the melting points of the pre-expanded L-LDPE beads indicate the peak temperatures obtained from the evaluation of the heat consumption (endothermic curve) of the sample at a temperature elevation rate of 10°C/min. The peak temperature at the low temperature side (melting point at the low temperature side) and the peak temperature at the high temperature side (melting point at the high temperature side) are designated $T_{ML}$ and $T_{MH}$ respectively. The areas at these peak temperatures are designated $A_L$ and $A_H$ repectively (Figure 2).

It is preferred that the L-LDPE used in the present invention is a copolymer of ethylene with an $\alpha$-olefin having 4 to 10 carbon atoms, the copolymer having a melting point of 115 to 130°C, a density of 0.915 to 0.940 g/cm$^3$ and a MI of 0.1 to 5 g/10 min.

Examples of the $\alpha$-olefin having 4 to 10 carbon atoms used as the comonomer include 1-butene, 1-pentene, 1-hexene, 3,3-dimethyl-1-butene, 4-methyl-1-pentene, 4,4-dimethyl-1-pentene, 1-octene, etc. These comonomers may be used singly or in combination of two or more.

When the melting point of the copolymer described above is lower than 115°C, the heat resistance of the expanded product obtained is insufficient and when it exceeds 130°C, the product approximates to high density polyethylene, resulting in difficulties in molding.

In case that the density of the copolymer described above is less than 0.915 g/cm$^2$, the rigidity of the resin is insufficient so that molded articles having a high expansion degree can be obtained only with difficulty; when the density is larger than 0.940 g/cm$^2$, the impact resistance becomes poor and the product is fragile and approximates to high density polyethylene, which renders molding difficult.

When the MI of the copolymer described above is less than 0.1, the fluidity upon expansion is poor, resulting in difficult expansion to a high degree, and the surface smoothness of the molded article becomes poor. On the other hand, when the MI exceeds 5, the fluidity becomes excessively large so that continuous cells tend to occur upon the expansion and the cell diameter tends to be non-uniform.

The melting point of the copolymer described above is the peak temperature obtained from the evaluation of the heat consumption at a temperature elevation rate of 10°C/min as explained above. The density is a value determined in accordance with JIS K 6760 (JIS K 7112, Method D) and the MI is a value determined in accordance with JIS K 6760 (JIS K 7210, 190°C, under a load of 2.16 kg). These L-LDPEs are preferably in a non-crosslinked state but they may also be crosslinked with peroxides or radiation.

The L-LDPE which can be used in the present invention may also contain appropriate additives such as a thermal stabilizer, a UV absorbing agent, an antistatic agent, a flame retardant, a coloring agent or finely divided inorganic powders depending upon the purpose. Particularly in case that the L-LDPE is used in the form of beads having a relatively small bead diameter as in the present invention which will be explained later, re-granulation with an extruder, may be sometimes necessary. Therefore, it is preferred that phenyl type and/or phosphorus type antioxidants be added in an amount ranging from 0.01 to 0.5 wt% based on the resin, in order to prevent thermal deterioration of the L-LDPE. Examples of the phenol type antioxidant include octadecyl-3-(3,5-di-tertiary-butyl-4-hydroxyphenyl)propionate and petaerythritol-tetrakis [3-(3,5-di-tertiary-butyl-4-hydroxyphenyl)propionate]. Examples of the phosphorus type antioxidant include tris (2,4-di-tertiary-butylphenyl) phosphite, poly (nonyl-phenyl) phosphite and triphenyl phosphite.

It is preferred that the L-LDPE beads used in the present invention have a bead weight of 0.5 to 20 mg/bead. When the bead weight is less than 0.5 mg/bead, it tends to be difficult to provide highly expanded articles; with more than 20 mg/bead, the pre-expanded beads become too large so that the expansion-molding in a mold tends to be carried out only with difficulty.

To produce the pre-expanded L-LDPE beads of the present invention, there is particular limitation to a specific process but the following pre-expansion method is advantageous to obtain the two fusion peaks in the DSC method.

The process comprises dispersing L-LDPE beads and a volatile blowing agent in water in the presence of a dispersing agent in a pressure vessel, heating the dispersion to a determined expansion temperature in a range of -25 to +10 °C of the melting point of the resin beads to impregnate the resin beads with the blowing agent under a pressure higher than the vapor pressure of the volatile blowing agent and then discharging the mixture of the beads and water into an atmosphere showing a pressure lower than in the vessel, while keeping the temperature and pressure in the vessel constant. In this case, the ratio $A_H/A_L$ of

3

EP 0 279 455 B1

the peak area $A_H$ at the high temperature side to the peak area $A_L$ at the low temperature side varies depending upon molecular structure of L-LDPE, but $A_H/A_L$ can generally be controlled by controlling the expansion temperature during the pre-expansion.

Examples of the volatile blowing agent which can be used in the present invention include aliphatic hydrocarbons or halogenated hydrocarbons having a boiling point of -50 to 120°C, for example, propane, butane, pentane, hexane, heptane, cyclopentane, cyclohexane, monochloromethane, dichloromethane, monochloroethane, trichloromonofluoromethane, dichlorodifluorom ethane, dichloromonofluoromethane, trichlorotrifluoroethane and dichlorotetrafluoroethane. These blowing agents may be introduced into the L-LDPE in an amount of 5 to 50 parts (parts by weight, hereafter the same) per 100 parts of the L-LDPE, which is provided for the expansion.

In the process for pre-expansion of the beads which comprises dispersing the L-LDPE beads and the volatile blowing agent in water in the presence of the dispersing agent in a pressure vessel, taking the system to a high temperature under high pressure and then discharging into a low pressure region, the amount of the volatile blowing agent to be used is determined in such a manner that the content of the blowing agent in the resin is in the range described above, taking into account the kind of the blowing agent, the desired expansion magnification and the amount of the resin in the vessel to the volume of the vessel.

The dispersing agent is used to prevent agglomeration of the resin beads with each other upon the heating. There can be used, for example, water-soluble high molecular weight substances such as polyvinyl alcohol, methyl cellulose and N-polyvinylpyrrolidone or sparingly water-soluble, finely divided inorganic materials such as calcium phosphate, magnesium pyrrophosphate, zinc carbonate, titanium oxide and aluminum oxide. In the case of using the inorganic materials described above, it is preferred that a small quantity of a surface active agent such as a sodium alkylbenzenesulfonate, sodium $\alpha$-olefinsulfonate or a sodium alkylsulfonate is employed in addition as a dispersing aid to reduce the amount of the inorganic material used, in order to improve fusion of the pre-expanded beads with each other upon the molding. In this case, approximately 0.1 to 3 parts of the sparingly water-soluble, finely divided inorganic material and approximately 0.001 to 0.5 parts of the anionic surface active agent are used based on 100 parts of the resin beads. Further in case that a water-soluble high molecular weight substance is used, approximately 0.1 to 5 parts are used based on 100 parts of the resin beads.

The amount of the L-LDPE beads to be dispersed in water is preferably 10 to 100 parts per 100 parts of water, in view of improved productivity and dispersion stability and reduced costs.

In order to achieve the desired ratio of the peak area $A_H$ at the high temperature side to the peak area $A_L$ at the low temperature side, the heating temperature may vary depending upon factors such as the kind of L-LDPE used, the kind of the volatile blowing agent and the desired expansion magnification, but it is generally in the range of -25 to +10°C, preferably in a range of -20 to +5°C, relative to the melting point. With a melting point of, for example, 120°C, the heating temperature is chosen within the range of 95 to 125°C. When the heating temperature is lower than that range, the reduction in the expansion magnification is remarkable and when the temperature is higher than the range, the rate of closed cells in the pre-expanded beads decreases.

To impregnate the L-LDPE beads with the volatile blowing agent described above, a conventional method may be used, which comprises bringing the dispersion in the pressure vessel into contact with the volatile blowing agent while stirring in the temperature range described above. The inner pressure of the vessel in this case is a pressure higher than the vapor pressure of the volatile blowing agent.

By discharging the aqueous dispersion of the L-LDPE beads from the vessel into an atmosphere having a pressure lower than that in the vessel while keeping the temperature and pressure in the vessel constant, pre-expanded L-LDPE beads which are suitable for expansion-molding in a mold can be obtained.

As pre-expanded L-LDPE beads, those having the peak area ratio $A_H/A_L$ of 5 to 80% are used in the present invention; with less than 5%, the allowable temperature range for the molding becomes narrow and the dimensional shrinkage (sink mark) of the molded articles becomes large. When the ratio exceeds 80%, the surface property of the molded article becomes worse and at the same time, the internal fusibility becomes worse so that the heating temperature must be raised, resulting in a long molding cycle.

The thus obtained pre-expanded beads are charged in a pressure vessel and compressed by pressurized gas. After the pre-expanded beads are charged in a mold which can be closed but cannot be sealed, an excess of the gas is released from the mold. In this case, the compression rate of the pre-expanded beads is in a range of 5 to 60%. Then, the pre-expanded beads are heated and fused with steam to give a molded article in the shape of the mold. The molded article is withdrawn from the mold and aged and heated in a conventional manner to give the molded article of L-LDPE.

The compression rate of the pre-expanded beads described above is determined as follows.

4

The compression rate is a value obtained by dividing the weight of the pre-expanded beads of L-LDPE as filled in the mold under atmospheric pressure using a feeder as used for expanded styrol by the weight of the pre-expanded beads after discharging an excess of the gas from the mold subsequent to the compressive filling described above. It is expressed by the equation:

$$\text{Compression rate (\%)} = \left( 1 - \frac{\text{Weight of pre-expanded beads upon filling under atmospheric pressure}}{\text{Weight of pre-expanded beads upon compressive filling}} \right) \times 100$$

With a compression rate of less than 5% the surface property of the molded article becomes worse and sink marks or shrinkage tend to occur; on the other hand, when the compression rate exceeds 60%, internal fusion becomes worse so that the molding cycle is prolonged and at the same time, the pressure strength of the molding machine and the mold becomes greater, which is not economical.

Next, the present invention will be described in more detail by referring to the examples, comparative examples and reference examples but is not deemed to be limited to these examples.

Examples 1 to 10, Comparative Examples 1 to 6 and Reference Examples 1 and 2

## Table 1

| Kind of L-LDPE | A | B |
|---|---|---|
| Comonomer | 1-Butene | 1-Octene |
| M.I.(g/10 min) | 1.1 | 2.0 |
| Density (g/cm²) | 0.920 | 0.930 |
| Melting point by DSC method(℃) | 120 | 126 |
| Weight of bead (mg/1 bead) | 4.5 | 4.5 |

In a pressure vessel were charged 100 parts of the two kinds of L-LDPE pellets A and B shown in Table 1 20 to 50 parts of dichlorodifluoromethane, 1.0 part of powdery basic tertiary calcium phosphate and 0.006 part of sodium n-paraffin sulfonate as dispersing agents together with 300 parts of water. The mixture was heated to a predetermined temperature. The pressure in the vessel in this case was approximately 23 to 30 kg/cm²-G. While maintaining the pressure in the vessel at 23 to 31 kg/cm²-G by supplying dichlorodifluoromethane under pressure, a valve located at the lower part of the pressure vessel was opened and the aqueous dispersion was discharged through an orifice plate having an opening diameter of 4 mm ∅ into atmospheric pressure to perform pre-expansion, whereby pre-expanded beads having an expansion magnification of 20 to 50 times were obtained.

The thus obtained pre-expanded beads had a peak area ratio $A_H/A_L$ (peak area $A_H$ based on the melting point at the high temperature side to the peak area $A_L$ based on the melting point at the low temperature side; measured by the DSC method as shown in Table 2. In the examples and the comparative examples, molded articles were obtained by charging the pre-expanded beads in a pressure vessel, compressing the beads under air pressure, immediately filling them in a block mold having a size of 290×270 × 50 mm under various compression rates and heating under a steam pressure of approximately 4.0 to 1.0 kg/cm²-G. After drying at 50 °C for 12 hours and then allowing to stand for 24 hours at room temperature, the molded articles were evaluated.

With respect to the physical properties of the molded articles thus obtained, fusion rate, dimensional shrinkage rate and surface appearance of each molded article were evaluated by the methods described below. The results are shown in Table 2. In Table 2, the steam pressure for heating and the molding cycle are also described.

In the reference examples, molded articles were obtained by charging the pre-expanded beads in a pressure vessel, compressing the beads by air of 70 °C × 9 kg/cm$^2$-G for 120 minutes to impart the internal pressure to the pre-expanded beads, withdrawing the beads under atmospheric pressure, filling them in the mold described above and heating with steam under approximately 1.0 and 1.1 kg/cm$^2$-G. Conditions of production and physical properties of the product are shown in Table 2. For reference, the internal pressures of the beads immediately before filling them into the mold are also given in the table.

Fusion rate:

After making a crack having a depth of approximately 5 mm on the surface of the molded article with a knife, the molded article is broken along the crack, the rupture cross-section is observed and the rate of the number of the broken beads to the total number of the beads is determined.

◎ :        fusion rate of 80% or more
○ :        fusion rate of 60 to less than 80%
Δ :        fusion rate of 50 to less than 60%
X :        fusion rate of les than 50%

A standard fusion rate satisfactory for the molded article is generally at least 60%.

Dimensional shrinkage rate:

The size of the molded article is measured with a vernier caliper and the shrinkage is calculated based on the size of the mold used.

◎ :        shrinkage rate of 2% or less
○ :        shrinkage rate of 2 to less than 3%
Δ :        shrinkage rate of 3 to less than 5%
X :        shrinkage rate of 5% or more

Surface appearance:

The molded articles are evaluated based on the following measures:

◎ :        Unevenness is not observed on the surface and gaps between the beads are hardly observed.
○ :        Unevenness is somewhat observed on the surface but gaps between the beads are hardly observed.
Δ :        Unevenness is not observed on the surface but gaps between the beads are somewhat remarkable.
X :        Unevenness is observed on the surface and gaps between the beads are extremely large.

As is evident from the results shown in Table 2, molded articles of L-LDPE having a minimized dimensional shrinkage rate (good dimensional accuracy) and excellent fusion rate and surface appearance can be produced in high productivity, when the peak area ratio $A_H/A_L$ (peak area $A_H$ at the high temperature side to peak area $A_L$ at the low temperature side;measured by the DSC method) is in the range of 5 to 80% and the compression rate of the pre-expanded beads to the mold for the expansion-molding is 5 to 60%. Further, as compared to conventional processes in which pre-expanded beads are treated under pressure to impart the internal pressure to the beads and then expansion-molding is performed, the process can save initial investment for installations and molded articles having a quality comparable to that of the conventional molded articles can be obtained.

Table 2

| | Magnification of Pre-expanded beads (high magnification) | AH/AL (%) | Compression Rate (%) | Maximum Heating Steam Pressure (kg/cm²-G) | Molding Cycle (second) | Magnification of Molded Article (time) | Dimensional Compression Rate | Fusion Rate | Surface Appearance | Resin |
|---|---|---|---|---|---|---|---|---|---|---|
| Example 1 | 35 | 35 | 8 | 1.0 | 148 | 26 | ○ | ◎ | ○ | A |
| 2 | 35 | 35 | 16 | 1.0 | 152 | 24 | ○ | ◎ | ◎ | A |
| 3 | 35 | 35 | 32 | 1.2 | 197 | 22 | ◎ | ◎ | ◎ | A |
| 4 | 35 | 35 | 50 | 2.2 | 250 | 19 | ◎ | ○ | ◎ | A |
| 5 | 34 | 6 | 16 | 1.2 | 190 | 24 | ○ | ◎ | ○ | A |
| 6 | 35 | 75 | 16 | 1.5 | 200 | 23 | ○ | ○ | ○ | A |
| 7 | 20 | 30 | 17 | 1.1 | 150 | 14 | ○ | ◎ | ○ | B |
| 8 | 20 | 30 | 33 | 1.3 | 198 | 13 | ◎ | ◎ | ◎ | B |
| 9 | 50 | 34 | 18 | 1.0 | 145 | 35 | ○ | ◎ | ○ | B |
| 10 | 50 | 34 | 35 | 1.2 | 193 | 32 | ◎ | ◎ | ◎ | B |
| Comparative Example 1 | 35 | 35 | 0 | 1.0 | 146 | 27 | × | ◎ | ○ | A |
| 2 | 35 | 35 | 65 | 4.0 | 300 | 17 | ○ | ○ | △ | A |
| 3 | 34 | 4 | 16 | 1.0 | 146 | 24 | ○ | △ | × | A |
| 4 | 35 | 85 | 16 | 1.0 | 146 | 24 | ○ | × | × | A |
| 5 | 35 | 85 | 16 | 2.0 | 250 | 22 | △ | △ | △ | A |
| 6 | 34 | 4 | 16 | 2.0 | 250 | 22 | × | ○ | △ | A |
| Reference Example 1 | 35 | 35 | 1.4 (inner pressure of particle) | 1.0 | 185 | 30 | ◎ | ◎ | ◎ | B |
| 2 | 20 | 30 | 1.6 ( " ) | 1.1 | 180 | 17 | ◎ | ◎ | ◎ | B |

**Claims**

1. A process for production of an expansion-molded article of a linear low density polyethylene resin in a mold which comprises compressing pre-expanded linear low density polyethylene resin beads having two melting points (measured by differential scanning calorimetry) and having a ratio:

$$5\% \leq A_H / A_L \times 100\% \leq 80\%$$

using a pressurized gas, filling a mold capable of closing but incapable of sealing with said compressed beads, then venting said mold and heating and fusing the beads with steam wherein the compression rate of the pre-expanded beads immediately before said heating with steam to the original pre-expanded beads is maintained at 5 to 60% ($A_L$ being the peak fusion area at the melting point at the low temperature side ($T_{ML}$) and $A_H$ being the peak fusion area at the melting point at the high temperature side ($T_{MH}$)).

2. A process as claimed in claim 1, wherein said linear low density polyethylene resin is a copolymer of ethylene with an $\alpha$-olefin having 4 to 10 carbon atoms, the copolymer having a melting point of 115 to 130°C, a density of 0.915 to 0.940 $g/cm^2$, a MI of 0.1 to 5 g/10 min.

3. A process as claimed in claim 2, wherein said $\alpha$-olefin having 4 to 10 carbon atoms is 1-butene, 1-pentene, 1-hexene, 3,3-dimethyl-1-butene, 4-methyl-1-pentene, 4,4-dimethyl-1-pentene and/or 1-octene.

4. A process as claimed in claim 1 or 2, wherein said linear low density polyethylene resin contains a phenol type antioxidant and/or a phosphorus type antioxidant in an amount of 0.01 to 0.5 wt% based on said polyethylene resin.

5. A process as claimed in claim 1, wherein said linear low density polyethylene resin beads have a bead weight of 0.5 to 20 mg/bead.

**Patentansprüche**

1. Verfahren zur Herstellung von Expansions-Formteilen aus linearem Polyethylenharz mit niedriger Dichte in einer Form, umfassend das Zusammenpressen von vorexpandierten linearem Polyethylenharzkörnern mit niedriger Dichte, die zwei Schmelzpunkte besitzen (gemessen mittels Differentialscanningcalorimetrie) und ein Verhältnis:

$$5 \% \leq A_H / A_L \times 100 \% \leq 80 \%$$

aufweist, unter Verwendung eines Druckgases, das Füllen einer Form mit den zusammengepreßten Körnern, die verschlossen, aber nicht versiegelt werden kann, und anschließend das Entlüften der Form und Erhitzen und Schmelzen der Körner mit Dampf, wobei die Kompressionsrate der vorexpandierten Körner kurz vor dem Erhitzen mit Dampf zu den ursprünglich vorexpandierten Körnern 5 bis 60 % beträgt ($A_L$ ist die Fläche des Peaks beim Schmelzvorgang am Schmelzpunkt auf der Niedertemperaturseite ($T_{ML}$) und $A_H$ ist die Fläche des Peaks beim Schmelzvorgang am Schmelzpunkt auf der Hochtemperaturseite ($T_{MH}$)).

2. Verfahren nach Anspruch 1, wobei das lineare Polyethylenharz mit niedriger Dichte ein Copolymer aus Ethylen und einem $\alpha$-Olefin mit 4 bis 10 Kohlenstoffatomen ist, und das Copolymer einen Schmelzpunkt von 115 bis 130°C, eine Dichte von 0,915 bis 0,940 $g/cm^2$ und einen Schmelzindex (MI) von 0,1 bis 5 g/10 min aufweist.

3. Verfahren nach Anspruch 2, wobei das $\alpha$-Olefin mit 4 bis 10 Kohlenstoffatomen 1-Buten, 1-Penten, 1-Hexen, 3,3-Dimethyl-1-buten, 4-Methyl-1-penten, 4,4-Dimethyl-1-penten und/oder 1-Octen ist.

4. Verfahren nach Anspruch 1 oder 2, wobei das lineare Polyethylenharz mit niedriger Dichte ein Antioxidationsmittel vom Phenoltyp und/oder ein Antioxidationsmittel vom Phosphortyp in einer Menge von 0,01 bis 0,5 Gew.-%, bezogen auf das Polyethylenharz enthält.

5. Verfahren nach Anspruch 1, wobei die Körner aus linearem Polyethylenharz mit niedriger Dichte ein Korngewicht von 0,5 bis 20 mg pro Korn aufweisen.

**Revendications**

1. Procédé de préparation, dans un moule, d'un article moulé par expansion à partir d'une résine de polyéthylène linéaire à basse densité, comprenant une compression de perles de résine de polyéthylène linéaire à basse densité, préexpansées, ayant deux points de fusion (mesurés par une calorimétrie par analyse différentielle) et ayant un rapport :

$$5\ \% \leq A_H/A_L \times 100\ \% \leq 80\ \%$$

une utilisation d'un gaz sous pression, un remplissage d'un moule, susceptible d'être fermé mais non scellé, par lesdites perles comprimées, puis une purge du moule et un chauffage et une fusion des perles par de la vapeur d'eau, procédé dans lequel le taux de compression entre les perles préexpansées immédiatement avant ledit chauffage par de la vapeur d'eau et les perles préexpansées d'origine est maintenu à 5 jusqu'à 60 % ($A_L$ étant la zone de fusion en pic au point de fusion du côté basse température ($T_{ML}$) et $A_H$ étant la zone de fusion en pic au point de fusion du côté haute température ($T_{MH}$)).

2. Procédé suivant la revendication 1, caractérisé en ce que la résine de polyéthylène linéaire à basse densité est un copolymère d'éthylène avec une $\alpha$-oléfine ayant 4 à 10 atomes de carbone, le copolymère ayant un point de fusion de 115 à 130°C, une densité de 0,915 à 0,940 g/cm$^2$ et un MI de 0,1 à 5 g/10 min.

3. Procédé suivant la revendication 2, caractérisé en ce que ladite $\alpha$-oléfine comprenant 4 à 10 atomes de carbone est du 1-butène, du 1-pentène, du 1-hexène, du 3,3-diméthyl-1-butène, du 4-méthyl-1-pentène, du 4,4-diméthyl-1-pentène et/ou du 1-octène.

4. Procédé suivant l'une des revendications 1 et 2, caractérisé en ce que la résine de polyéthylène linéaire à basse densité contient un antioxydant de type phénol et/ou un antioxydant de type phosphore en une quantité de 0,01 à 0,5 % en poids par rapport à la résine de polyéthylène.

5. Procédé suivant la revendication 1, caractérisé en ce que les perles de résine de polyéthylène linéaire à basse densité ont un poids de perle de 0,5 à 20 mg/perle.

FIG. 1

$T_M = 120\ °C$

FIG. 2

$A_H/A_L = 35\%$

$A_H$

$A_L$

$T_{MH} = 127\ °C$

$T_{ML} = 118\ °C$